# EUROPEAN PATENT APPLICATION

(11) **EP 1 743 837 A1**
(43) Date of publication of application: **17.01.2007**
(21) Application number: 05015311.3
(22) Date of filing: 14.07.2005
(51) Int. Cl.: B65B 9/20, B65B 51/30

(54) **Form-fill-seal machine with shiftable forming and/or sealing means**

(71) Applicant: CFS Weert B.V., 6000 AG Weert (NL)
(72) Inventor: Hendriks, Peter Joseph, 6005 KJ Weert (NL); Van Gulik, Rudolf Adrianus, 6051 CJ Maasbracht (NL); Van Rens, Joseph Johan Maria, 6003 BK Weert (NL)
(74) Representative: Wolff, Felix

(57) **Abstract**

**Summary**

The present invention relates to a bagging machine with sealing means which apply cross seals to a film tube and/or forming means, which form sidefolds into the film tube and which are both shiftable back and forth along an axis by shifting means from a starting point to an end point, whereas the shifting means comprise rotating means. Additionally, the present invention relates to processes for producing packaging items from a film tube which is formed and/or cross sealed by forming means and/or sealing means, which are both shiftable back and forth along an axis by shifting means from a starting point to an end point.

## Description

The present invention relates to a bagging machine with sealing means which apply cross seals to a film tube and/or forming means, which form sidefolds into the film tube and which are both shiftable back and forth along an axis by shifting means from a starting point to an end point, whereas the shifting means comprise rotating means. Additionally, the present invention relates to processes for producing packaging items from a film tube which is formed and/or cross sealed by forming means and/or sealing means, which are both shiftable back and forth along an axis by shifting means from a starting point to an end point.

Nowadays, products, especially food, is often packaged in tubelike bags, comprising a cross seal at the top and the bottom and which often also have side folds, which are formed by forming means. These bags are preferably produced on horizontal- or vertical packaging machines, which are known to the person skilled in the art. These machines comprise shifting means, in order to move work the forming tools and/or the sealing tools have along the direction of the flow of the film from a starting point to an end point and back. In many cases, especially the sealing means, which apply cross seals to the film tube, are also used to transport the film; i.e. draw the film off, for example, from a roll. In the past, the starting point remained unchanged, regardless of the size of the bag. However, in some cases, this increased the production time per bag.

It was therefore the objective of the present invention to improve the bagging machines according to the state of the art.

This problem is solved by a bagging machine according to claim 1. Preferred embodiments of the bagging machines are claimed in the dependent claims 2 to 11.

It was totally surprising for a person skilled in the art and could not have been expected that the inventive bagging machines are very easily produced and operated. The production time and the energy consumption per bag can be reduced.

The bagging machine according to the present invention is operated in cycles; i.e the bagging machine is operated intermittently. During each cycle, the sealing means and/or the forming means are both shifted back and forth, along the direction of motion of the film tube, by shifting means. At the start- and at the end point, the velocity of the sealing- and/or forming means is zero. The motion of the sealing means and/or the forming means starts from a starting point and is carried out until an end point. During this motion, the sealing and/or forming takes place and simultaneously the film is drawn off from a film-role by the sealing means and/or the forming means. The draw-off can be supported by special draw-off means. However, preferably the draw off of the film is executed exclusively by the sealing- and/or forming means. At the end of a cycle, the sealing means and/or the forming means are moved from the end point back to the starting point and the next cycle starts.

According to the present invention, the starting point of the sealing- and/or the forming means is not fixed, but for each bag-type, which is produced on the inventive bagging machine, chosen such, that the peak torque (i.e. the maximal torque needed during one cycle) of the motor means is minimized at a given cycle time and/or the cycle time is minimized; i.e. the production rate is increased for a given motor. With the inventive apparatus, the speed of production can be increased and/or a smaller motor can be used for a given production rate. The set-up of the inventive machine for a new package design can be adjusted easily and the machine can be used for the production of a wide range of packaging items without changing the motor that drive the shifting means.

Preferably, the torque needed during one cycle, especially during the upward movement, is distributed as equally as possible during the cycle-time and/or during the upward movement.

Inventively, the bagging machine comprises shifting means. Theses shifting means comprise motor means and means that convert the motion of the motor means into the motion of the sealing means and/or the forming means, preferably along the axis of motion of the film tube.

Preferably, the motor is a servo motor.

Preferably, the shifting means comprise rotating means and means which convert the rotating motion of the rotating means into an essentially linear motion. The rotating means can rotate clockwise and/or counterclockwise. The rotation can comprise a full circle, i.e. 360°, or less; i.e. the segment of a circle.

The rotation of the rotating means can be caused by or can be any motor known to a person skilled in the art. However a motor with a transmitter, for example a servo motor is preferred, so that the speed and the position of the rotating means is known at every point in time. This motor is preferably connected to a computer that controls the inventive bagging machine. Preferably, the motor is operated automatically.

Preferably, the rotating means is a crank.

In another preferred embodiment of the present invention, the means that convert the rotation of the rotating means into a linear motion is a rod with a first and a second end, whereas the first end is connected with the rotating means and the second end interacts with guiding means. These guiding means can be for example, a slotted link or a guiding rod with a corresponding bearing.

Preferably, the sealing means and/or the forming means comprise and opening and closing mechanism, which works preferably independent of the shifting means.

The bagging machine according to the present invention can be any bagging machine known by a person skilled in the art, preferably the bagging machine is a horizontal- or vertical flow wrapper.

In a preferred embodiment of the present invention, the bagging machine comprises one or more forming shoulder(s), so that two bags can be produced simultaneously. This embodiment has the advantage that the production rate (bags/minute) can be doubled. Additionally, this machine is produced and operated more cost efficiently.

Preferably, the bagging machine comprises a cutting device that cuts the planar film into two films, so that two bags can be produced simultaneously.

Preferably, the bagging machine comprises one pair of cross seal jaws and preferably two pairs of forming tools, one pair located in line with one forming shoulder. More preferably, the cross seal jaws and/or the forming tools are connected to one shifting means.

Another subject matter of the present invention is a process for producing packaging items from a film tube which is formed and/or cross sealed by forming means and or sealing means, which are both shifted back and forth along an axis by shifting means from a starting point to an end point, whereas the shifting means comprise rotating means, characterized in, that the starting point is chosen such that the motor torque of the rotating means is minimized.

Preferably, two bags are produced simultaneously.

The present invention will now be explained using **figures 1 to 3**. These explanations do not limit the scope of protection. The explanations refer to the inventive machines as well as the inventive processes.

**Figure 1** shows schematically a vertical flow wrapper.

**Figure 2** shows the inventive shifting means during the sealing period.

**Figure 3** shows the rotating means 5.

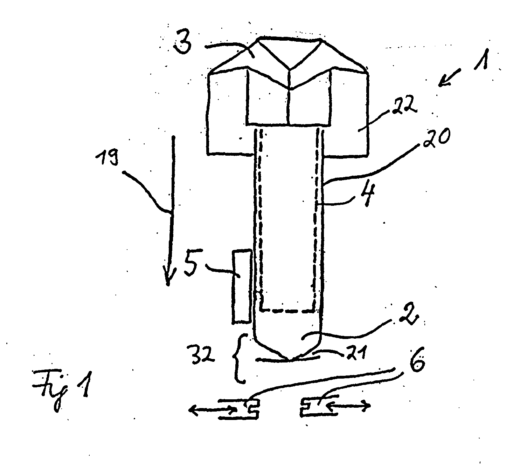

**Figure 1** shows a schematic of a vertical flow wrapper 1. The flow wrapper 1 comprises a forming shoulder 3, that converts a flat film web 22 into a film tube 20 which comprises a longitudinal seal, which has been applied to the film by the longitudinal sealing means 5. The direction of the motion of the film tube is depicted by arrow 23. At the lower end of the film tube, a bag 2 is formed first by forming means 32, which form sidefolds 21 into the film tube 20 and then by cross seals, which are applied to the film tube 20 by cross sealing jaw 6. The person skilled in the art understands that the sidefolds 21 and the cross seals can also be applied essentially simultaneously. The motion of the cross sealing jaws 6 is depicted by two arrows. The film tube 20 is formed around a fill pipe 4 through which the goods that have to be packaged are filled into the bag 2. The inventive bagging machine operates intermittently. During one cycle, the forming means 32 as well as the sealing jaws 6 move downwards during the forming or sealing action. During this downward movement, especially the sealing means clamp the film, draw it off a film-roll and pull it downward. As soon as the forming or sealing is completed, the respective tools are moved back and the next cycle with the respective action starts again.

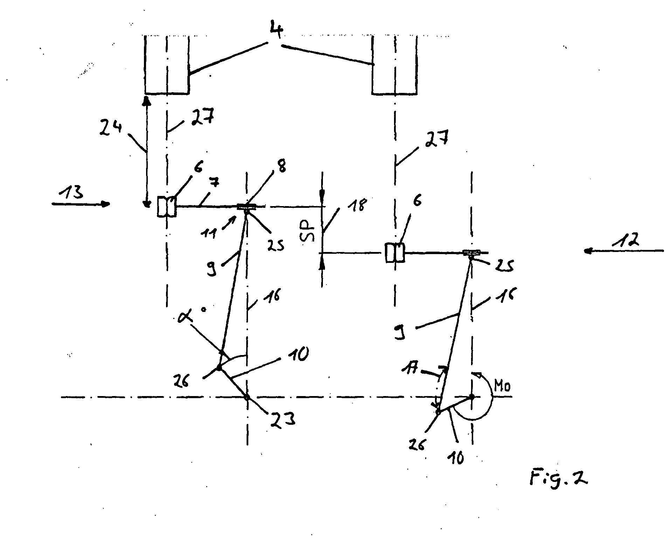

The shifting mechanism of the sealing jaws is depicted in **figure 2**. Starting from the left, the fill pipe 4 and a vertical axis 27 are shown. The sealing jaw 6 move up and down along the vertical axis 27. The movement is caused by a crank 10 and a rod 9, which is on its end 26 pivotably connected to the crank 10 and on the other end 25 pivotably connected to guiding means 16, which guide the end 24 along the desired pass. The crank 10 is connected to or part of motor means 23. Also connected to the end 24 is a bearing 8 that bears a rod 7, which is connected to a motor, which causes the sealing jaws 6 to open and to close. The person skilled in the art understands that a similar mechanism exists for the forming means, which are not depicted. In the left hand side picture, the sealing jaws are stationary in their starting position 13. In this vertical position, the sealing jaws have been closed and consequently, the film tube is clamped between the sealing jaws 6. This position; i.e. the distance 24 from the filling tube 4, which is also defined by the starting angle α, is calculated such that the peak momentum; i.e. the maximal torque Mo needed for one cycle is minimal. This distance 24 is normally changed for each and every new application. The distance 18, which is the length of the bag that is currently produced, is also the period SP in which the application of the cross seals takes place. While the sealing- and/or forming means reach their end position 12 (please compare right hand picture), their vertical speed is reduced, so that it is zero, when the end position 12 is reached. Subsequently, sealing- and/or forming means are opened and moved to their starting position 13 and a new cycle starts. The upward movement of the sealing- and/or forming means is achived by a counter clockwise rotation of the crank 10.

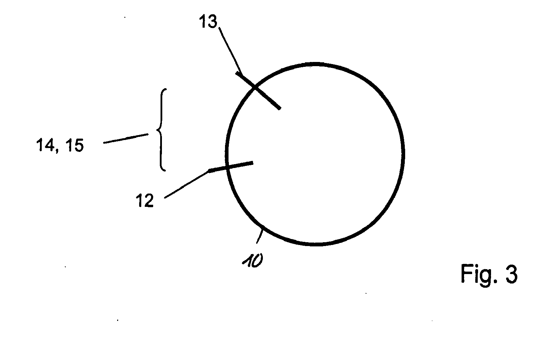

**Figure 3** shows crank 10 in different positions of end 23 of rod 9. Number 13 depicts the starting point, while reference number 12 depicts the end point. Between these points sealing 15 and forming 14 takes place. The length of the sealing- and/or forming time is determined by the time needed to shift the sealing means from starting- to the end-point. The starting point 13 is calculated newly, each time the type of packaging item produced on the machine is changed. Thus, normally the location of the starting point changes with each different packaging item produced on the inventive machine. The starting point 13 is calculated such, that the peak torque (i.e. the maximal torque needed from the motor during one cycle) is minimized at a given cycle time. Due to the reduction of the maximal torque needed, the cycle time is reduced.

### Reference numbers

- 1: bagging machine
- 2: bag
- 3: forming shoulder
- 4: filling tube
- 5: longitudinal sealing means
- 6: cross seal jaws
- 7, 8: opening and closing mechanism for the sealing jaws
- 9: rod
- 10: crank
- 11: opening and closing means for the forming means
- 12: end point
- 13: starting point
- 14: forming
- 15: sealing
- 16: guiding means
- 17: arrow depicting the direction of rotation
- 18: sealing period
- 19: direction of motion of the film
- 20: film tube
- 21: sidefolds
- 22: film web
- 23: motor means
- 24: distance
- 25: first end
- 26: second end
- 27: vertical axis
- 32: forming tools
- 33: rotation for the build-up of speed
- SP: sealing period
- Mo: torque
- α: starting angle

## Claims

1. Bagging machine (1) with sealing means (6) which apply cross seals to a film tube (20) and/or forming means (32), which form sidefolds (21) into the film tube and which are both shiftable back and forth along an axis (16) by shifting means (9, 10) from a starting point (13) to an end point (12), whereas the shifting means (9, 10) comprise motor means (23), **characterized in, that** the starting point (13) is chosen such that the torque (Mo) of the motor means (23) is minimized at a given cycle time and/or the cycle time is minimized for a given motor.

2. Bagging machine according to claim 1, **characterized in, that** the shifting means (9, 10) comprise rotating means (10), which rotate clockwise and/or counterclockwise.

3. Bagging machine according to one of the preceding claims, **characterized in, that** the rotating means (10) is a crank.

4. Bagging machine according to one of the preceding claims, **characterized in, that** means (9) is a rod with a first and a second end (25, 26) and that the first end (26) is connected with the rotating means (10) and the second end (25) interacts with guiding means (16).

5. Bagging machine according to one of the preceding claims **characterized in, that** the sealing means (6) and/or the forming means (32) comprise a closing and opening mechanism (7, 8), respectively.

6. Bagging machine according to one of the preceding claims, **characterized in, that** each for each bag-design a new starting point (13) of the sealing and/or forming means is calculated.

7. Bagging machine according to one of the preceding claims, **characterized in, that** during the downward movement or at the starting point of the shifting means (9, 10) first the forming (14) and then the sealing (15,) takes place or the forming and sealing is carried out simultaneously.

8. Bagging machine, according to one of the preceding claims, **characterized in, that** it is a horizontal- or vertical flow wrapper.

9. Bagging machine according to of the preceding claims, **characterized in, that** it comprises one or more forming shoulder(s) (3).

10. Bagging machine according to claim 9, **characterized in, that** it comprises one pair of cross seal jaws (6) and preferably two pairs of forming tools (32).

11. Bagging machine according to claim 10, **characterized in, that** the cross seal jaws (6) and/or the forming tools (32) are connected to one shifting means (9, 10).

12. Process for producing packaging items from a film tube which is formed and/or cross sealed by forming means (32) and/or sealing means (6), which are both shifted back and forth along an axis (16) by shifting means (9, 10) from a starting point (13) to an end point (12),whereas the shifting means comprise motor means (23), **characterized in, that** the starting point (13) is chosen such that the peak torque of the motor means (10) is minimized.

13. Process according to one of the preceding claims, **characterized in, that** two bags (2) are produced simultaneously.

## Amended claims

### Amended claims in accordance with Rule 86(2) EPC.

**1.** Bagging machine (1) with sealing means (6) which apply cross seals to a film tube (20) and/or forming means (32), which form sidefolds (21) into the film tube and which are both shiftable back and forth along an axis (27) in the direction of motion of the film tube by shifting means (9, 10) from a starting point (13) to an end point (12), whereas the shifting means (9, 10) comprise motor means (23) and rotating means (10), which rotate clockwise and/or counterclockwise, **characterized in that** the distance from the starting point (13) to the end point (12) is determined by the length of a bag to be produced and the starting point (13) is chosen such that the torque (Mo) of the motor means (23) is minimized at a given cycle time and/or the cycle time is minimized for a given motor.

**2.** Bagging machine according to one of the preceding claims, **characterized in, that** the rotating means (10) is a crank.

**3.** Bagging machine according to one of the preceding claims, **characterized in, that** means (9) is a rod with a first and a second end (25, 26) and that the first end (26) is connected with the rotating means (10) and the second end (25) interacts with guiding means (16).

**4.** Bagging machine according to one of the preceding claims **characterized in, that** the sealing means (6) and/or the forming means (32) comprise a closing and opening mechanism (7, 8), respectively.

**5.** Bagging machine according to one of the preceding claims, **characterized in, that** each for each bag-design a new starting point (13) of the sealing and/or forming means is calculated.

**6.** Bagging machine according to one of the preceding claims, **characterized in, that** during the downward movement or at the starting point of the shifting means (9, 10) first the forming (14) and then the sealing (15,) takes place or the forming and sealing is carried out simultaneously.

**7.** Bagging machine, according to one of the preceding claims, **characterized in, that** it is a horizontal- or vertical flow wrapper.

**8.** Bagging machine according to of the preceding claims, **characterized in, that** it comprises one or more forming shoulder(s) (3).

**9.** Bagging machine according to claim 8, **characterized in, that** it comprises one pair of cross seal jaws (6) and preferably two pairs of forming tools (32).

**10.** Bagging machine according to claim 9, **characterized in, that** the cross seal jaws (6) and/or the forming tools (32) are connected to one shifting means (9, 10).

**11.** Process for producing packaging items from a film tube which is formed and/ or cross sealed by forming means (32) and/or sealing means (6), which are both shifted back and forth along an axis (16) in the direction of motion of the film tube by shifting means (9, 10) from a starting point (13) to an end point (12),whereas the shifting means comprise motor means (23) and rotating means (10), **characterized in that** the distance from the starting point (13) to the end point (12) is determined by the length of a bag and the starting point (13) is chosen such that the peak torque of the motor means (10) is minimized.

**12.** Process according to claim 11, **characterized in, that** two bags (2) are produced simultaneously.
